# EUROPEAN PATENT APPLICATION

(11) **EP 3 432 229 A1**
(43) Date of publication of application: **23.01.2019**
(21) Application number: 17766637.7
(22) Date of filing: 13.03.2017
(51) Int. Cl.: G06N 99/00

(54) **ABILITY IMPARTING DATA GENERATION DEVICE**

(30) Priority: 14.03.2016 JP 2016049329
(71) Applicant: Omron Corporation, Kyoto-shi, Kyoto 600-8530 (JP)
(72) Inventor: ANDO, Tanichi, Komaki-shi Aichi 485-0802 (JP)
(74) Representative: Horn Kleimann Waitzhofer Patentanwälte PartG mbB
(86) International application number: PCT/JP2017/010041
(87) International publication number: WO 2017/159638

(57) **Abstract**

Provided is a mechanism for increasing the efficiency of development work for adding a new ability to an apparatus. In addition, a mechanism that makes it possible to easily add a new ability to another apparatus is provided. A target apparatus has an architecture that is modeled as an ability acquisition model including an ability unit that executes an ability, a data input unit that is an interface for input of the ability unit, and a data output unit that is an interface for output of the ability unit. an ability-providing-data generation apparatus generates ability providing data including ability setting data for setting a function in the ability unit in the ability acquisition model of the target apparatus, input setting data for setting a function in the data input unit in the ability acquisition model of the target apparatus, and output
setting data for setting a function in the data output unit in the ability acquisition model of the target apparatus.

## Description

### CROSS-REFERENCES TO RELATED APPLICATION

This application claims priority to Japanese Patent Application No. 2016-049329 filed March 14, 2016, the entire contents of which are incorporated herein by reference.

### TECHNICAL FIELD

The present invention relates to a mechanism for improving the efficiency of development work using machine learning, and in particular relates to a technique for generating data for adding a new ability to another apparatus.

### RELATED ART

Since many years, artificial intelligence and neural networks have been studied widely. For example, techniques for object recognition using images have advanced, and the recognizability has been improving steadily. Due to a new learning method called Deep Learning, recognizability has improved rapidly in recent years, and image classification is about to reach a level beyond those by humans. Deep Learning techniques can be applied not only to image recognition but also to various fields such as speech recognition, personal authentication, behavior prediction, summary writing, machine translation, monitoring, autonomous driving, failure prediction, sensor data analysis, music genre determination, content generation, and security systems. By using machine learning such as Deep Learning, a machine can acquire a new ability without human intervention.

At the present point in time, AI techniques such as Deep Learning are special techniques, and studies and development need to be performed by personnel having a special skill in order to apply an AI technique to a specific field. For example, for each client request, personnel adept in AI technology has been performing system development to create a learning plan by analyzing the hardware and demands of the client and, constructing a training system, generating a new neural network through learning, and embedding the new neural network into the system of the client. In learning using an AI technique such as Deep Learning, large-scale data is often required, and, furthermore, the number of repetitive calculations is large, and thus a large-scale training system is required. In such a training system, not only an AI technique is implemented, but also a system that is different from and more complicated than a conventional Web application is used, including architectures for handling large-scale data, parallelization, making a calculation program into hardware, and the like. Under the current circumstances, there are many cases where AI technique service companies adept in AI technology perform both consulting and system development for client companies that are not familiar with AI technology.

Patent Documents 1 and 2 disclose a technique for rewriting printer firmware as a technique related to a method for implementing a new ability in an apparatus. In addition, Patent Documents 3 and 4 disclose a technique related to machine learning, and Patent Document 5 discloses a system for identifying characters using Deep Learning.

### RELATED ART DOCUMENTS

### PATENT DOCUMENTS

Patent Document 1: JP 2009-134474A
Patent Document 2: JP 2007-140952A
Patent Document 3 JP 2014-228972A
Patent Document 4: JP 5816771
Patent Document 5 JP 2015-53008A

### SUMMARY OF THE INVENTION

### PROBLEM TO BE SOLVED BY THE INVENTION

It is expected that a need for companies that develop apparatuses to develop, by themselves, products in which AI technology is embedded will increase in future. In addition, it is expected that a need for embedding AI technology into apparatuses that are already in use will increase. There are a large number of such demands regarding embedded devices in particular. However, machine learning (training) requires an advanced system, a large number of calculation resources, and the like. Therefore, it is not easy for an engineer of an ordinary manufacturer to carry out machine learning by him- or herself. In view of this, it is conceivable to outsource machine learning, but, for example, it is not easy for an engineer who is not familiar with AI technology such as a developer of embedded devices to embed, into his or her apparatus, the result of machine learning that has been carried out externally. On the other hand, it is also not easy for an AI engineer to develop an AI program specialized in a specific product or service such as an embedded device and a network service. In addition, there is the concern that there are not sufficient AI engineers, which will lead to longer development periods.

The present invention has been made in light of the above circumstances, and aims to provide a mechanism that allows even a person who does not have knowledge or a system regarding machine learning to easily add a new ability to his or her apparatus.

### MEANS FOR SOLVING THE PROBLEMS

The present invention adopts the following configurations in order to achieve at least one of the above-described aims.

A first aspect of the present invention is an ability-providing-data generation apparatus for generating ability providing data that is data for adding a new ability to a target apparatus, and, as an architecture for additionally embedding a new ability in a basic configuration of the target apparatus, the target apparatus has an architecture that is modeled as an ability acquisition model including an ability unit that executes an ability, a data input unit that is an interface for input of the ability unit, and a data output unit that is an interface for output of the ability unit, and the ability-providing-data generation apparatus has an ability-providing-data generation unit for generating ability providing data including ability setting data for setting a function in the ability unit in the ability acquisition model of the target apparatus, input setting data for setting a function in the data input unit in the ability acquisition model of the target apparatus, and output setting data for setting a function in the data output unit in the ability acquisition model of the target apparatus.

According to the present invention, under the assumption that the target apparatus has an architecture corresponding to the ability acquisition model, it is possible to provide ability providing data having a data structure suitable for the ability acquisition model, and thus it becomes easy to embed a new ability into the target apparatus. Thus, it is possible to improve the efficiency of development work for adding a new ability to a target apparatus.

Preferably, the ability setting data is data for setting, in the ability unit, a function for executing the new ability that is to be added to the target apparatus, the input setting data is data for setting, in the data input unit, a function related to an interface for input to the ability unit, and the output setting data is data for setting, in the data output unit, a function related to an interface for output from the ability unit.

The function related to the interface for input to the ability unit preferably includes at least one of a function for importing data from the basic configuration of the target apparatus into the data input unit, a function for importing data from a device other than the target apparatus into the data input unit, a function for performing a process on imported data, and a function for converting a data format so as to be compatible with the ability unit. Such a function makes it possible to give, to the ability unit, data required when executing a new ability.

The function related to the interface for output from the ability unit preferably includes at least one of a function for performing a process on data that is output from the ability unit, a function for converting a data format so as to be compatible with the basic configuration of the target apparatus, and a function for converting a data format so as to be compatible with a device other than the target apparatus. Such a function makes it possible to output a result of a new ability executed by the ability unit in a desired format.

The ability providing data preferably includes operation checking data that is used for checking whether or not the new ability that has been added operates normally after the functions are respectively set in the ability unit, the data input unit, and the data output unit based on the ability providing data. Accordingly, it is possible for the target apparatus to easily and automatically perform an operation check on whether or not the new ability was successfully embedded, which increases user-friendliness. For example, preferably, the operation checking data includes one or more pieces of input data and determination information for determining, when the input data is input to the data input unit and after being processed in the ability unit, whether or not it is the data that should be output from the data output unit, and it is preferably checked whether or not the new ability that has been added operates normally by inputting the input data to the data input unit, and performing, using the determination information, a determination regarding the data that is output from the data output unit. Accordingly, it is possible to check a series of operations of the data input unit, the ability unit, and the data output unit.

The ability providing data preferably includes data that is embedded into a circuit of the target apparatus (e.g., data that is written to a rewritable electronic circuit of a target apparatus), a program that is executed by a processor of the target apparatus, and the like. By providing ability providing data in such a format, work for adding an ability providing data to a target apparatus becomes easy.

The new ability is preferably an ability that is acquired through machine learning. Machine learning requires an advanced system and a large number of calculation resources, and thus there are cases where it is difficult for a developer or owner of a target apparatus to carry out machine learning by him- or herself. In such a case, by using the ability-providing-data generation apparatus according to the present invention, it is possible to realize a highly convenient service in which another person performs machine learning on behalf of someone else, and delivers the learning result in the format of ability providing data.

Note that the present invention can be regarded as an ability-providing-data generation apparatus that has at least a portion of the above-described configurations or functions. The present invention can also be regarded as an ability-providing-data generation method that includes at least a portion of the above-described processing, a program for causing a computer to execute the method, or a computer-readable recording medium that stores the program in a non-transitory manner. The present invention can also be regarded as the data structure of ability providing data. It is possible to mutually combine the above-described configurations and processing, unless technical inconsistency occurs, so as to constitute the present invention.

### EFFECTS OF THE INVENTION

According to the present invention, it is possible to provide a mechanism for improving the efficiency of development work for adding a new ability to an apparatus. According to the present invention, it is also possible to provide a mechanism that makes it possible to easily add a new ability to an apparatus.

### BRIEF DESCRIPTION OF THE DRAWINGS

- Fig. 1: is a conceptual diagram of a learning service that is provided by a learning service providing system.
- Fig. 2: is a diagram of the system configuration of a learning service providing system.
- Fig. 3: is a diagram of the configuration of an ability acquisition model.
- Fig. 4: is a diagram showing an example of an ability acquisition model for which Deep Learning is used.
- Fig. 5: is a diagram showing an example of the data structure of training information and training accepting information.
- Fig. 6: is a diagram of the configuration of a request accepting unit.
- Fig. 7: is a diagram of the configuration of a target apparatus.
- Fig. 8: is a diagram showing an example of the data structure of ability providing data.
- Fig. 9: is a diagram of a detailed configuration of a learning instruction unit and a learning simulator.
- Fig. 10: shows a processing flow of a learning service providing system.
- Fig. 11: is a diagram showing an example of the data structure of learning request information.

### EMBODIMENTS OF THE INVENTION

The present invention relates to a mechanism for improving the efficiency of development work for adding a new "ability" to an apparatus. In an embodiment to be described below, a "learning service providing system" that is a preferred specific example of such a mechanism will be described.

### Term Explanation

Before describing the embodiment, terms that are used in the present specification will be described.

A "learning service" refers to a service for performing machine learning on behalf of someone else. Specifically, a "learning service" refers to a service for performing, for a requester (a person who desires to give a new ability to a target apparatus), machine learning of the new ability that is added to the target apparatus, based on a request from the requester, and providing the "ability" obtained as a result of the machine learning to the target apparatus of the requester. A "learning service providing system" refers to a system that is in charge of a series of processing related to a learning service such as accepting a learning request from a requester, carrying out machine learning, and proving a learning result to a requester.

"Machine learning" means that, when a goal is input to a machine, the machine acquires an ability for accomplishing the goal, and the machine can then exert the newly acquired ability. In the present specification, "learning" means machine learning unless explicitly stated otherwise.

An "ability" is a function that can be provided by an apparatus, or processing that can be executed by an apparatus. Adding a new ability to an apparatus means adding a new function or processing to the apparatus, or improving the performance of a function or processing that the apparatus already has. Note that a "target apparatus" of a requester may be any type of apparatus as long as the apparatus is configured to allow a new ability to be embedded therein. For example, an ability can be used for developing an apparatus in various fields such as a manufacturing apparatus, an FA robot, an inspection apparatus, a production management system, a plant control system, a monitoring system, a building control system, a shop management system, a humanoid robot, a disaster prevention robot, a Web service, a mobile terminal, a household electrical appliance, a work system, an embedded system, a biological information system, an image recognition apparatus, a speech recognition apparatus, an autonomous driving system, a failure prediction system, a data analysis apparatus, a content generation apparatus, a security system, a financial system, and a virus monitoring apparatus.

"Ability providing data" refers to data for adding an "ability" obtained as a result of learning to a requester's target apparatus. Ability providing data is data having a data format that allows the ability providing data to be embedded (implemented) into a target apparatus of a requester as it is. It becomes easy to embed a learning result of a learning service into a target apparatus of a requester by converting the learning result into data in an appropriate format.

In the embodiment to be described below, the definition of a program is referred to as a "model" in order to distinguish between a program in an executable format and the definition of a program. A "model" generalizes/abstracts behavior, properties, and the like of a target, expresses them using a predetermined descriptive language, and is the same as a model that is used in model-based development. Any program and data structure can be defined as a model. In addition, any apparatus, environment, physical phenomenon, and the like can be defined as a model. In model-based development, the internal configurations of constituent elements and relationship between constituent elements are defined as models, and a state where a plurality of models are combined can be simulated. In addition, by using a model-based development tool, a program in an executable format can be automatically generated from a model.

A model can include not only the definition of a program but also a program having an executable format. Accordingly, it is possible to reduce processing when executing requested learning using a learning simulator.

In the embodiment to be described below, by developing a program using a model-based development tool, it is possible to clearly define the relationship between portions in simulation of learning. Note that equivalent programs can also be developed without using model-based development tools to implement a system. Therefore, the present invention is not limited to systems developed using a model-based technique.

Some of the items that are listed in a model can be "parameterized". Specifically, a configuration can be adopted in which the value of an item is defined as a parameter (variable), and a requester is prompted to input or select the value of the parameter when a learning request is received, or the value of the parameter can be set as appropriate by the system when learning is executed. Hereinafter, a parameterized item is referred to as a "parametric item" or an "undefined item", or is simply referred to as a "parameter", and an item whose value and content are defined is referred to as a "constant item" or a "defined item". Parametric items are not limited to data items. For example, by using a functional programming language, a processing item (method item) can also be parameterized. In a functional programming language, an arithmetic function can be passed as an argument of an arithmetic function. Due to this function, a predetermined program can be started, while being handled as an argument of another program. By designating ID information of another arithmetic function (program) as an argument of an arithmetic function, processes that can be selected are parameterized. This increases the code amount, but similar processes can thus be written in a general object-oriented language and C language.

A "learning model" is a model obtained by formulating a method for acquiring, through machine learning, a new ability that is to be added to a target apparatus. A learning model is created for each type of machine learning for which this system can accept a request. In the following description, the phrase "learning model" is used as simply meaning "type of machine learning" in some contexts.

A "target apparatus model" refers to a model of a target apparatus of a requester (an apparatus to which a new ability is to be added). The present system generates and outputs ability providing data for allowing execution (of an ability) using this target apparatus model.

A "target model" refers to a model of a target to which a target apparatus of a requester (an apparatus to which a new ability is to be added) is related. Examples of a target to which a target apparatus is related include the environment surrounding the target apparatus, another apparatus that performs input to/receives output from the target apparatus, a target on which the target apparatus acts on, and the like.

### Operation Concept of Entire System

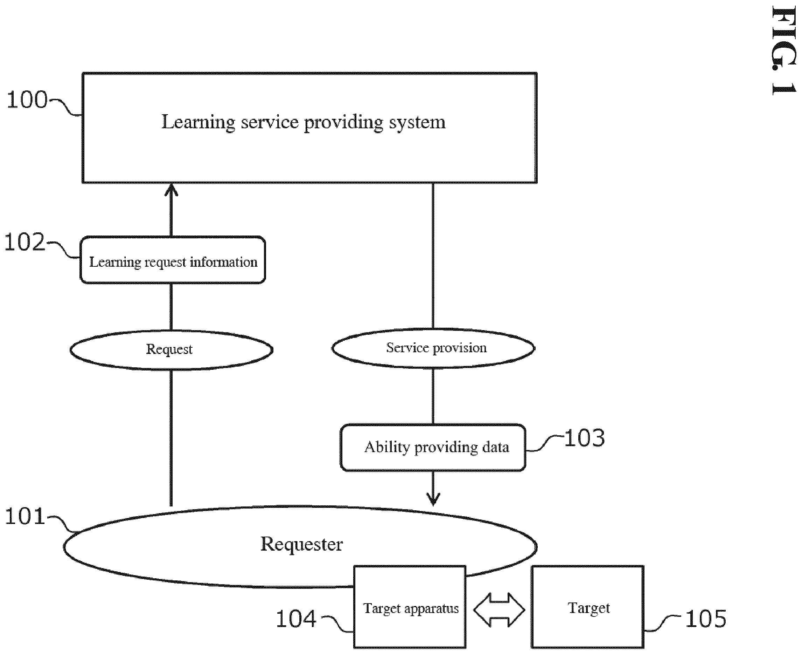

Fig. 1 shows a conceptual diagram of a learning service that is provided by a learning service providing system of this embodiment. A requester (client) 101 accesses a learning service providing system 100 via a network such as the Internet, and requests machine learning of an ability that is to be added to a target apparatus 104. Information required for performing machine learning is provided as learning request information 102 from the requester 101 to the learning service providing system 100. The learning service providing system 100 performs necessary machine learning based on the learning request information 102 provided from the requester 101, while simulating the target apparatus 104 and a target 105 of the requester 101. When learning requested by the requester 101 is complete, the learning service providing system 100 provides, to the requester 101, a new ability acquired as a learning result, as ability providing data 103 having a data format that allows the data to be embedded into the target apparatus 104. Note that the requester 101 may access the learning service providing system 100 using a personal computer, or if the target apparatus 104 can access the Internet, may directly access the learning service providing system 100 from the target apparatus 104.

### System Configuration

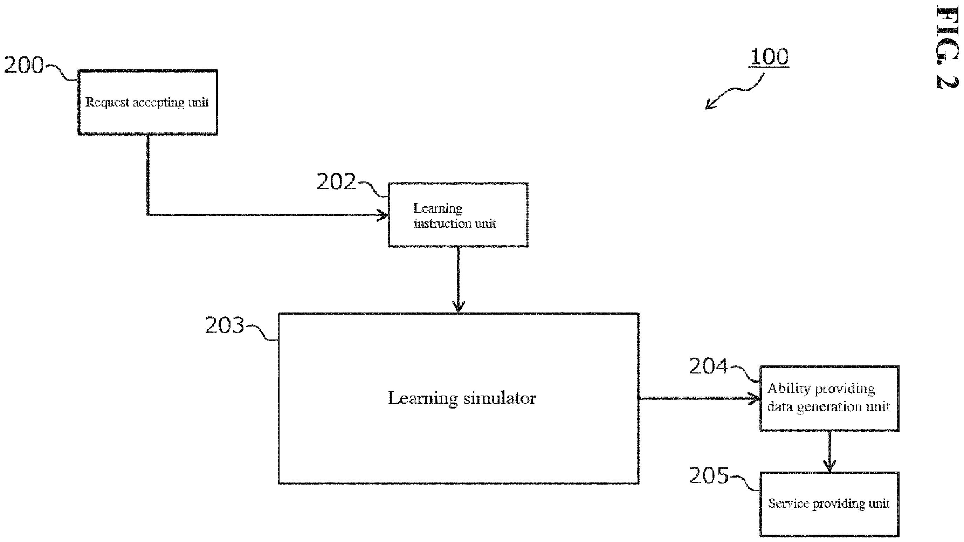

Fig. 2 shows a diagram of the system configuration of a learning service providing system. The learning service providing system 100 has a request accepting unit 200, a learning instruction unit 202, a learning simulator 203, an ability-providing-data generation unit 204, and a service providing unit 205.

This system 100 can be constituted by a general-purpose computer having hardware resources such as a processor, a memory, a storage apparatus (e.g., a hard disk or a semiconductor disk), an input device (e.g., a keyboard, a mouse, and a touch panel), a display device, and a communication device. Functions of this system 100 shown in Fig. 2 may be realized by a program stored in the storage apparatus being loaded to the memory, and being executed by the processor. Note that this system 100 may be constituted by one computer, or may be constituted through distributed computing that is performed by a plurality of computers. In addition, some or all of the functions of this system 100 can also be realized using dedicated hardware (e.g., a GPU, an FPGA, or an ASIC), or the like in order to increase the speed of processing.

In this embodiment, the learning service providing system 100 of Fig. 2 is illustrated as a specific example of an ability-providing-data generation apparatus according to the present invention, but the configuration of the ability-providing-data generation apparatus is not limited thereto. For example, if a learning request is accepted by another system or a person, the function of the request accepting unit 200 is not necessary. In addition, if ability providing data is provided to a requester by another system or a person, the function of the service providing unit 205 is not necessary. In addition, if a method for acquiring an ability that is to be added to the target apparatus 104 is a method other than a method using machine learning, the functions of the learning instruction unit 202 and the learning simulator 203 are not necessary either.

### Acquisition of Ability

When providing this learning service to various types of target apparatuses 104, it is necessary to standardize the architecture for embedding a new ability into the target apparatuses 104. In view of this, in this embodiment, an architecture for embedding a new ability into the target apparatus 104 is modeled (turned into a model), and this is referred to as an "ability acquisition model". An embedding interface compatible with the ability acquisition model is provided in the target apparatus 104, and the learning simulator 203 of this system 100 performs machine learning so as to acquire an ability that matches the ability acquisition model, and, as a result, the ability providing data 103 generated in this system 100 can be embedded into the target apparatus 104.

By defining an ability acquisition model, information regarding an architecture that need to be standardized is digitized as model data. The digitized information regarding the ability acquisition model is used for logically matching the learning simulator 203 and the target apparatus 104 for each learning model. By digitizing the information, programs and circuits can be automatically generated and automatically tested using various development tools.

If an ability acquisition model prepared in advance is not compatible with the target apparatus 104, the learning requester 101 may change a portion or all of the ability acquisition model prepared in advance and create a new ability acquisition model. An ability acquisition model may be written in a system modeling language, stored in a file, and included in the learning request information 102 to be provided to the learning service providing system 100, and as a result, learning requests can be performed with respect to any target apparatus 104.

By assigning, to each ability acquisition model, identification information (e.g., an ability acquisition model ID or an ability acquisition model name) for mutually identifying the ability acquisition models, it is possible to specify the ability acquisition models of the learning simulator 203 and the target apparatus 104 using this identification information, and to perform logical matching.

By using an ability acquisition model, development can proceed without exchanging more technical information than is necessary between the requester 101 that requests learning and a person that receives the request (service provider).

Publicizing information regarding an ability acquisition model can help the dissemination of a product that is the target apparatus 104 corresponding to the publicized specific ability acquisition model. In addition, learning models corresponding to the publicized specific ability acquisition model can be provided from a plurality of vendors, and the learning level can be expected to increase through competition.

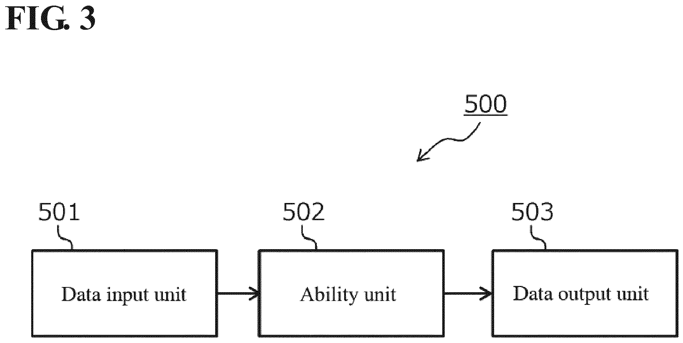

Fig. 3 shows the configuration of an ability acquisition model. The ability acquisition model 500 of this embodiment includes three definitions, namely an ability unit 502 configured to execute an ability, a data input unit 501 that is an interface for input of the ability unit 502, and a data output unit 503 that is an interface for output of the ability unit 502. The data input unit 501 receives data having a predetermined specification from the target apparatus 104 or another device, performs necessary data processing, converts the data format so as to be compatible with the ability unit 502, and inputs the result. The data input unit 501 includes definitions of specifications of data that is input from the target apparatus 104 or another device to the ability unit 502, such as the specification of data that is received from the target apparatus 104 and the like, the specification of data processing, and the specification of data that is input to the ability unit 502. The ability unit 502 performs information processing based on data that has been input from the data input unit 501, and outputs the result to the data output unit 503. By changing the internal configuration of this ability unit 502, the ability of the ability acquisition model 500 can be changed. The data output unit 503 receives a result from the ability unit 502, performs necessary data processing, converts the data format so as to be compatible with the target apparatus 104 or another device, and outputs the result. The data output unit 503 includes definitions of specifications of data that is output from the ability unit 502 to the target apparatus 104 or another device, such as the specification of data that is output from the ability unit 502, the specification of data processing, and the specification of data that is output to the target apparatus 104 with a predetermined interface specification.

By using the ability acquisition model 500, it is guaranteed that, in the learning simulator 203 and the target apparatus 104, the data input unit 501, the ability unit 502, and the data output unit 503 perform logically the same operation even if their implementations differ. In addition, by using ability acquisition models, learning can be requested without exchanging more information than is necessary between a learning requester and a party receiving that request.

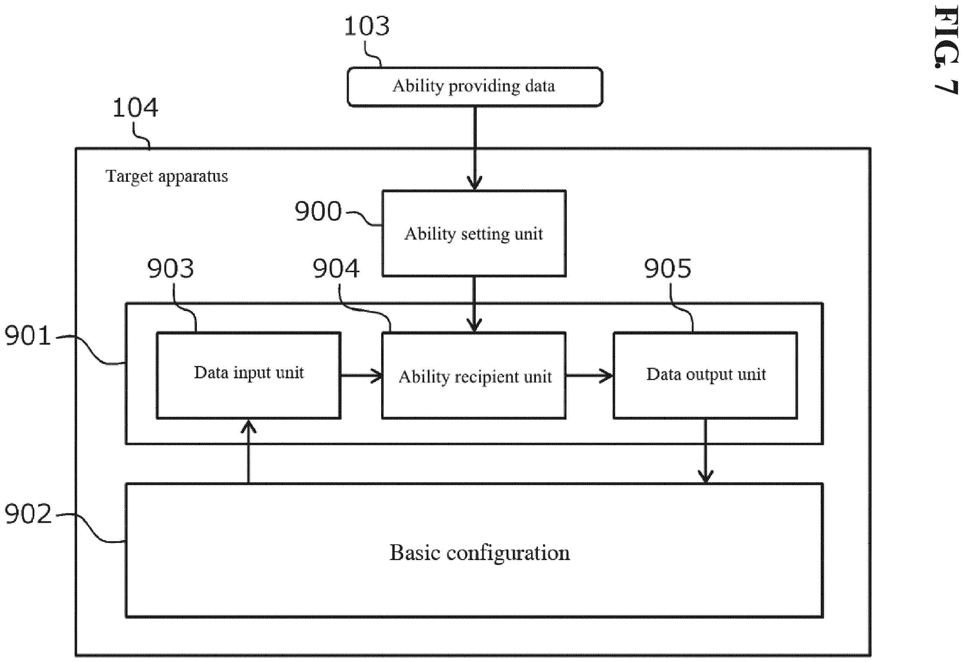

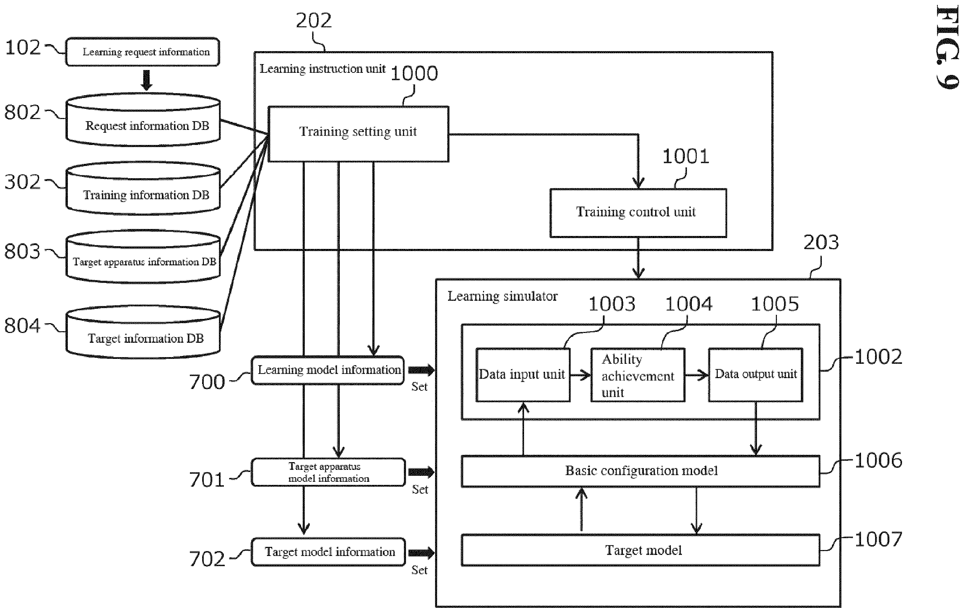

Note that, in the learning simulator 203 of this system 100, the ability acquisition model 500 is used for learning simulation for acquiring a new ability, and thus, in the following description, the ability unit 502 of the system 100 is also referred to as an "ability acquisition unit" (see ability acquisition unit 1004 in Fig. 9). On the other hand, in the target apparatus 104, the ability acquisition model 500 is used in order to accept and execute a new ability acquired in the system 100, and thus the ability unit 502 of the target apparatus 104 is referred to as "ability recipient unit" (see ability recipient unit 904 in Fig. 7). In addition, in the following description, reference numerals shown in Figs. 7 and 9 are used in order to distinguish between the ability acquisition model of the learning simulator 203 and the ability acquisition model of the target apparatus 104.

The ability acquisition model 500 preferably includes at least an interface specification for an interface between the data input unit 501 and the ability unit 502, an interface specification for an interface between the ability unit 502 and the data output unit 503, and information for specifying the configuration of the ability recipient unit 904 of the target apparatus 104 in order to make it possible to pass on an ability acquired by the learning simulator 203 to the target apparatus 104. For example, if an ability to acquire is "image classification", the relationship between the target apparatus 104 and the ability acquisition model is simple, and thus, only due to that, the learning simulator 203 and the target apparatus 104 can be matched. Specifically, it suffices for the input to be defined as image data and output to be defined as a classification result.

The ability acquisition model 500 can further include detailed information as described below.

The data that is input to the ability acquisition unit 1004 implemented in the learning simulator 203 and the data that is input to the ability recipient unit 904 of the target apparatus 104 need to be equivalent. The data input unit 501 of the ability acquisition model 500 can include information for defining the interface specification of data input from a basic configuration 902 of the target apparatus 104 to a data input unit 903. Any logic can be embedded into the data input unit 501.

In the case of using Deep Learning when performing learning, the ability recipient unit 904 is the deep neural network that is also used by the learning model, and thus the ability acquisition model 500 needs to include information for specifying the configuration of a network that can receive the ability. The information for specifying the configuration may uniquely define a network that can receive the ability, or may indicate a plurality of selectable ranges. In the case of other learning methods, information for specifying a learning logic such as a circuit and software for acquiring an ability is included. Accordingly, it is secured that the logical configuration of the ability acquisition unit 1004 of the learning simulator 203 matches the logical configuration of the ability recipient unit 904 of the target apparatus 104. On the other hand, a method for implementing the ability acquisition unit 1004 of the learning simulator 203 and a method for implementing the ability recipient unit 904 of the target apparatus 104 may be different, for example, in their hardware implementation and software implementation. For example, when the ability recipient unit 904 of the target apparatus 104 adopts a software implementation, in the learning simulator 203, the neural network of the ability acquisition unit 1004 can be composed of hardware in order to shorten the learning time.

The data that is output from the ability acquisition unit 1004 implemented in the learning simulator 203 via a data output unit 1005 and the data that is output from the ability recipient unit 904 of the target apparatus 104 via the data output unit 905 need to be equivalent. For this reason, the data output unit 503 of the ability acquisition model 500 can include information for defining an interface specification of data output from the data output unit 905 to the basic configuration 902 of the target apparatus 104.

Defining an interface specification of input/output between the ability acquisition model 500 and the basic configuration 902 of the target apparatus 104 enables the learning simulator 203 to perform a simulation using a model 1006 of the basic configuration 902. For example, in cases such as where an acquired ability controls the basic configuration 902 of the target apparatus 104, detailed information as described above is required.

The ability acquisition model 500 may include circuit information or an executable format for implementing the learning simulator 203 or implementing the target apparatus 104, and a program in an executable format. Conversely, it is also possible to define only a minimum interface specification. By defining only a minimum interface specification, the size of a file for defining the ability acquisition model 500 can be reduced. A configuration may also be adopted in which an ability acquisition model is automatically generated from a model for each of the learning simulator 203 and the target apparatus 104 such that definitions of the interface specifications and of the logic to be implemented are included. By automatically generating the ability acquisition model, the development efficiency of a learning model can be improved, and an exact specification check using model information can be performed automatically.

It suffices for the ability acquisition model 500 to be defined without inconsistencies between the learning simulator 203 and the target apparatus 104 in each learning model. The implementation of the portions in the learning simulator 203 and the target apparatus 104 corresponding to the ability acquisition model 500 may be different.

For example, the ability acquisition model 500 can be defined using an abstract class of an object-oriented programming language or a language function equivalent to a class that defines an interface. Furthermore, implementation classes can be included. Alternatively, the ability acquisition model 500 can be defined as an interface specification in a system modeling language. The ability acquisition model 500 can also be defined so as to include a logic that is implemented, in a system modeling language. Alternatively, the ability acquisition model 500 can be defined as an interface specification in a hardware descriptive language. The ability acquisition model 500 can be defined in a hardware descriptive language so as to include the logic that is implemented. In each case, only an interface specification may be defined, or the definition of a logic that is implemented in correspondence with the data input unit 501, the ability unit 502, and the data output unit 503 may be included.

The data input unit 1003 and the data output unit 1005 in the learning simulator 203 perform an operation of inputting/outputting, as learning data, data that is substantially equivalent to data that is input to/output from the data input unit 903 and the data output unit 905 in the target apparatus 104 in the learning simulator 203, to/from the ability acquisition unit 1004. Since it is sufficient that data substantially equivalent to data of the target apparatus 104 is input to the ability acquisition unit 1004, and thus the data input unit 1003 and the data output unit 1005 in the learning simulator 203 and the data input unit 903 and the data output unit 905 in the target apparatus 104 do not necessarily need to have the same configuration. If the format of data that is used for learning and the format of output data are different from the data format handled in the target apparatus 104, it is sufficient that a conversion is performed such that the interface between the data input unit 1003 of the learning simulator 203 and the ability acquisition unit 1004 matches the interface between the data output unit 1005 of the learning simulator 203 and the ability acquisition unit 1004. By matching the ability acquisition models between the learning simulator 203 and the target apparatus 104, it is secured that the ability acquisition unit 1004 and the ability recipient unit 904 of the target apparatus 104 at the time of learning can execute substantially the same abilities, and substantially the same data is input to/output from each of the ability acquisition unit 1004 and the ability recipient unit 904 of the target apparatus 104. In addition, due to the ability providing data 103, embedding a new ability into the target apparatus 104 can be easily realized. If the ability acquisition models are matched, even in the case where the ability acquisition unit 1004 of the learning simulator 203 and the ability recipient unit 904 of the target apparatus 104 have different implementation forms (e.g., hardware implementation and software implementation, or programming languages that are used are different), an ability can be provided using the ability providing data 103.

An ability (e.g., a program and various parameters for realizing information processing) that is exerted by the ability unit 502 is generated through machine learning. Machine learning can be carried out using Deep Learning, for example (in the following embodiment, a method for carrying out machine learning using Deep Learning is mainly envisioned). Note that the learning method is not limited to Deep Learning.

For example, to learn motor control, a new ability can be acquired using the following method. Constituent elements of a plurality of control logics are prepared in advance. Several constituent elements are randomly selected through training, and are connected. In connected models, the result is optimized using a genetic algorithm. The above operation is repeated in a predetermined range, and the best is selected.

For example, to learn the classification of character strings, a new ability can be acquired using the following method. A large number of samples classified by a person is prepared. Various character string functions are prepared. Character string functions are randomly selected, and the plurality of character string functions are combined. The parameters of the character string functions are optimized using a genetic algorithm. The above operation is repeated in a predetermined range, and the best is selected.

A new ability can also be acquired, for example, by randomly generating machine codes of a program for each portion, and selecting a machine code whose output for input is the best. By appropriately selecting the division of the program for each purpose, the learning speed can be increased.

An AI engineer selects an efficient ability acquisition model and a training method thereof for each request he or she accepts, and accepts a learning request. Various techniques are known as learning methods in Deep Learning. An AI engineer selects a technique according to which learning ends with less processing, for each target to which the technique is applied.

### Example of Deep Learning

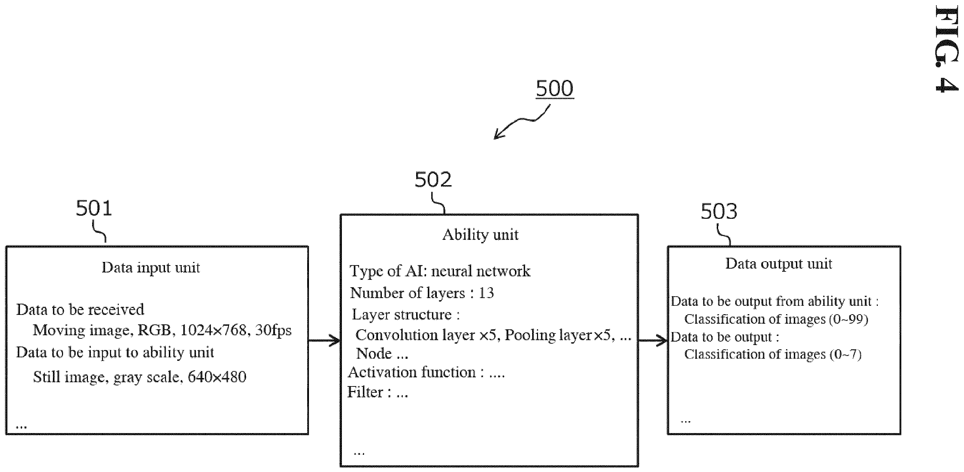

Fig. 4 shows an example of an ability acquisition model for which Deep Learning is used. The data input unit 501 is a functional block for converting the format of a signal that is input to the target apparatus 104 so as to be compatible with a neural network, and inputting the digitized signal. In the data input unit 501, "moving image, RGB, resolution 1024×768, and 30 fps" are defined as the specification of data that is received from the target apparatus 104, and "still image, gray scale, and resolution 640×480", are defined as the specification of data that is input to the ability unit 502, for example. If color information is not necessary, then converting the data into gray scale shortens the learning time and simplifies the circuit configuration of the ability unit 502. This is an example for the case of performing data format conversion, but a configuration can also be adopted in which, if color information is necessary, color signals of RGB are input as is. The ability unit 502 is a functional block for outputting a desired result from the input data using the neural network that underwent learning through training using Deep Learning. The ability unit 502 can be modeled as a subset of a neural network in which inputs and outputs of any number of layers having any size are all connected. If necessary, additional circuits such as a feedback circuit, a calculation circuit, a logic circuit, a storage circuit, a simultaneous circuit, a delay circuit, and a reset circuit can be added to the model of the ability unit 502. For example, the ability unit 502 may include definitions of the AI type, the number of layers, the structures of layers, an activation function, a weighting filter, and the like. When performing learning, a neural network is subsequently configured according to a configuration defined as a learning model, and parameters are optimized. The data output unit 503 is a functional block for converting output of a neural network into information that can be used by the target apparatus 104 or another devices, and outputting the converted output. In the data output unit 503, the specification of data that is output from the ability unit 502 and specification of data that is ultimately output after being converted into a data format required by the target apparatus 104, and the like are defined.

### Training Information 304

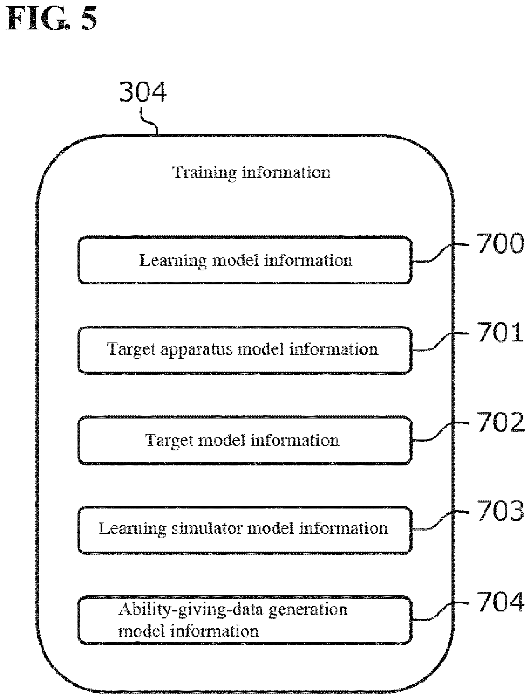

Fig. 5 shows an example of the data structure of training information. Training information 304 defines the information required for carrying out machine learning, and includes learning model information 700, target apparatus model information 701, target model information 702, learning simulator model information 703, and ability-providing-data generation model information 704. The information 700 to 704 will each be described below.

### (1) Learning Model Information 700

The learning model information 700 is information regarding a learning model. A learning model is a model acquired by formulating a method for acquiring, through machine learning, a new ability that is added to the target apparatus 104. Learning models are respectively created for the target apparatus 104 and the target 105 that can be handled. Note that the same learning model can be applied to apparatuses 104 and targets 105 whose behaviors are similar.

A learning model preferably includes the following information.

"Learning goal": by parameterizing some or all of items constituting the learning goal, the conditions of the learning goal can be defined as items that can be designated. Items of the learning goal may be any items such as the accuracy or an error of an output result of the ability unit 502, a result of evaluation performed using an evaluation formula, the number of repetitive calculations of learning, and the stability of the output.

"Definitions related to input of the ability unit": These define how data that is input to the ability unit 502 is input from the target apparatus 104 or another external device. For example, if two types of sensor data are input from the target apparatus 104, and average data thereof is given to the ability unit 502, the specification of the two types of sensor data, a method of processing for obtaining the average data, specification of data that is given to the ability unit, and the like may be defined. Data that is handled may include various types of data such as images, audio, natural languages, and sensor data, but if there are different types or specifications of data, different models are respectively defined.

"Definitions related to the configuration of the ability unit": These define the internal configuration of the ability unit 502 . For example, in the case of using a neural network of Deep Learning, the number of layers, the structures of layers (a convolution layer, a pooling layer, a fully connected layer, and a node), an activation function, a filter, and the like are defined. A configuration may be adopted in which a plurality of compatible configurations are defined (e.g., a range of the number of layers, and a variation of layer structures), and a configuration can be selected within those ranges.

"Definitions related to output of the ability unit": These define what type of information the data that is output from the ability unit 502 serves as when being output to the target apparatus 104 or another external device. For example, in the case where the ability unit 502 outputs a predicted probability (real numerical value), if a binary determination result regarding whether or not the probability is larger than a threshold value is output to the target apparatus 104, the specification of the data of the predicted probability, the specification of the data of the determination result, the specification of the threshold value, and the like are defined.

"Method for training the ability unit": This defines a method that is used for machine learning of the ability unit 502, specifically, a training program for carrying out machine learning. If an AI engineer creates a training program in advance, training can be automatically executed at the time of a request. For example, a training program of Deep Learning may be created by designating a configuration of input/output of a neural network, configurations of layers of a neural network, learning data, and the like. A training program of Deep Learning allows a new ability to be acquired, by sequentially inputting learning data, and optimizing the parameters of the layers of the neural network. A training program can also be defined as a model. By parameterizing items that can be selected in training, a small number of models can handle a large number of variations. In this embodiment, the above-described training program is defined as a model, for each learning model that is presented to the requester 101.

The above-described learning model can be written using a model descriptive language. If a learning model is written using a model descriptive language, it is possible to automatically convert the learning model in the model descriptive language into a program that can be executed by a simulator. A learning model may be written in a program that can be executed by a simulator, without using the model descriptive language.

Any method that allows model-based description can be applied to a learning model. For example, several programs that support an AI technique including Deep Learning may be provided. A learning model can be constructed using these programs. A model that is more advanced and faster may be created. If training information includes information regarding a learning model, a new ability can be acquired using a learning simulator.

The learning service providing system 100 performs learning simulation using a common architecture defined as the ability acquisition model 500, for each learning model, and, as a result an ability acquired through learning can be embedded into the target apparatus 104 using the ability providing data 103.

### (2) Target Apparatus Model Information 701

The target apparatus model information 701 is information regarding a model of the target apparatus 104. By using a target apparatus model, operations and input/output of the target apparatus 104 can be simulated by the system 100 through computer simulation without using the target apparatus 104 (actual machine) of the requester 101.

A target apparatus model may preferably include the following information.

"Configuration of the ability unit (ability recipient unit)": This is information that defines the hardware configuration of the ability recipient unit 904 of the target apparatus 104. For example, the type of FPGA (Field-Programmable Gate Array) may be designated, or the number of gates may be designated. Alternatively, in the case of software implementation, types and additionally useable storage capacities of a CPU (Central Processing Unit) and a GPU (Graphics Processing Unit) may be designated. In the case of using a cloud service, the type of cloud, the type of CPU, the number of CPUs, the number of clocks, and the storage capacity that is used may be designated. There is no limitation to these examples, and the circuit configuration may be defined using any method.

"Interface specification of ability acquisition model": This defines a method for connecting the data input unit 903, the ability recipient unit 904, and the data output unit 905 of the target apparatus 104. For example, in the case of an FPGA, definitions regarding signals of input/output terminals may be included. In the case of a software implementation, definitions of a software interface of the ability recipient unit 904 may be included. In the case of using a cloud service, definitions of a communication method for using an ability may be included. Any interface that can be defined as a model can be used as an interface of an ability acquisition model.

The data input unit 903, the ability recipient unit 904, and the data output unit 905 of the target apparatus 104 are each implemented by hardware or software. The data input unit 903, the ability recipient unit 904, and the data output unit 905 of the target apparatus 104 are respectively configured in accordance with specifications defined for the data input unit 501, the ability unit 502, and the data output unit 503 of the ability acquisition model 500.

In each learning model, the interface specifications need to be matched between an ability acquisition model 901 of the target apparatus 104 and an ability acquisition model 1002 of the learning simulator 203. The interface specification of the data input unit 501, the ability unit 502, and the data output unit 503 defined as the ability acquisition model 500 of a learning model is defined so as to match that of the data input unit 903, the ability recipient unit 904, the data output unit 905 of the target apparatus 104. By matching the ability acquisition models, it becomes possible to convert an ability acquired using the learning simulator 203 into the ability providing data 103, and embed the ability into the target apparatus 104.

"Model of the basic configuration of an apparatus": This is information that defines the basic configuration 902 originally provided in the target apparatus 104 (constituent elements except for configuration corresponding to the ability acquisition model 500). Regarding the configuration 901 corresponding to the ability acquisition model 500, the specification of the basic configuration 902 of the target apparatus 104 is required when performing learning simulation, in order to input signals and data to and receives output of signals and data from the basic configuration 902 of the target apparatus 104. The model of the basic configuration includes definition of an interface with a new ability that is realized by the basic configuration 902 and the ability acquisition model 901 of the target apparatus 104, for example. Specifically, definition of an input signal that is input from the basic configuration 902 to the data input unit 903, definition of an output signal that is output from the data output unit 905 to the basic configuration 902, definition regarding how those signals are handled in the target apparatus 104, and the like are included.

A new ability is acquired by an ability unit of an ability acquisition model using a learning method defined as a learning model. An input signal and output signal of a new ability may be different according to the content of a request, or may be different depending on the learning process. For example, the type of sensor that is selected as input, the number of classifications as an output result, and the like may be different. A new ability that is to be embedded into the ability recipient unit 904 by an ability setting unit 900 is combined with the functions of the data input unit 903 and the data output unit 905 to exert the new ability. The ability providing data 103 is generated as information for connecting the data input unit 903, the ability recipient unit 904, and the data output unit 905 to the basic configuration 902, according to input and output signals for each target apparatus.

It is sufficient that only the interface of the target apparatus 104 is described as a target apparatus model. A target apparatus model can be generated based on information that could be acquired from the requester 101 and a DB before training is started.

### (3) Target Model Information 702

The target model information 702 is information regarding a model of the target 105 to which the target apparatus 104 is related. By using a target model, a simulation in consideration of the target 105 that can affect the target apparatus 104 is possible. Here, the target 105 that can affect the target apparatus 104 may be another apparatus that is outside of the target apparatus 104, the environment surrounding the target apparatus 104, or the like.

It is sufficient that only the interfaces of the target 105 and the target apparatus 104 are described as a target model. A target model can be generated based on information that could be acquired from the requester 101 and a DB before training is started.

### (4) Learning Simulator Model Information 703

A learning simulator model is a model that defines the configuration of a simulator that is used for learning in this system 100. In this embodiment, a learning simulator is configured by combining a learning model, a target apparatus model, and a target model (which will be described later in detail).

### (5) Ability-providing-data Generation Model Information 704

An ability-providing-data generation model is a model that defines a method for generating the "ability providing data"103 to be embedded (incorporated) into a circuit of the target apparatus 104, and the like, based on the learning result of this system 100. Specifically, it is sufficient that a conversion program for converting a learning result into the ability providing data 103 is prepared as an ability-providing-data generation model.

For example, in the case of FPGA implementation, it is possible to configure a neuro circuit, an input interface circuit, and an output interface circuit. In the case of software implementation, software for emulating a neuro circuit and a program for setting parameters obtained as learning results are prepared. A configuration may be adopted in which a circuit for implementing an acquired ability is made into a component using the ability providing data 103, and the component is physically inserted into a receiving slot of the target apparatus 104.

The ability-providing-data generation model information 704 is created as a model for adapting an ability acquired in the ability unit according to each request from a requester to the target apparatus 104. The ability recipient unit 904 has a configuration that is different for each request content or each target apparatus. Therefore, the ability-providing-data generation model information 704 is created so as to be compatible with a configuration of each request content or each target apparatus. The ability-providing-data generation model information 704 may be created such that one ability-providing-data generation model information 704 is compatible with a plurality of request contents and a plurality of configurations of the ability recipient unit 904. The ability-providing-data generation model information 704 can be created with the types of the target apparatus 104 and target apparatus serving as parameters.

An object code of a program for generating ability providing data can be automatically generated by using the ability-providing-data generation model information 704. Alternatively, a programmer may create an object code using a programming language according to a definition included in the ability-providing-data generation model information 704. By executing an object code of a program for generating ability providing data, an ability acquired in the ability unit of the ability acquisition model 500 included in the learning simulator is converted into ability providing data that can be distributed to the external target apparatus 104, along with the configurations of the input unit 501 and the output unit 503.

A portion or all of the ability-providing-data generation model information 704 may be automatically generated using definition information of an ability acquisition model. A portion or all of the ability-providing-data generation model information 704 can be automatically generated using definition information of an ability acquisition model included in a learning model. For example, in the case of acquiring an ability of classifying a camera shot using a camera image, by using information regarding the input specification of an image included in the ability acquisition model, the configuration of the neural network, and the specification of classification output, it is possible to mechanically generate the ability-providing-data generation model information 704 for generating ability providing data. Accordingly, the efficiency the task of creating the ability-providing-data generation model information 704 improves.

The information included in the above-described training information 304 includes constant items whose values are defined by an AI engineer in advance and parametric items whose values are in an undefined state. Regarding the parametric items, the requester 101 is asked to input information when accepting a learning request. The number of parametric items is preferably as small as possible in order to reduce the burden of input on the requester 101, and to simplify the learning request. Therefore, for example, the learning simulator model information 703 and the ability-providing-data generation model information 704 are preferably defined in advance. In addition, also regarding the learning model information 700, the target apparatus model information 701, and the target model information 702, it is preferred that basic items are defined in advance, and items in which the requester 101 is asked to input information are limited to as small a number of items as possible such as the configuration and input/output of the ability unit 502, a learning goal, and the like.

### Request Accept Unit 200

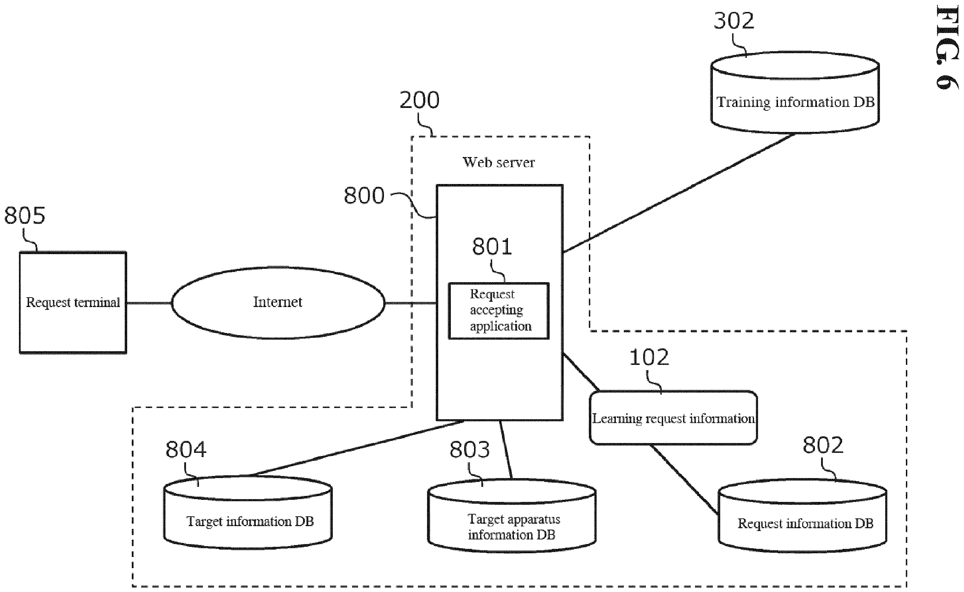

The configuration of the request accepting unit 200 will be described with reference to Fig. 6. The request accepting unit 200 has a function for accepting the learning request information 102 from a request terminal 805 of the requester 101 via the Internet. The request accepting unit 200 is constituted by a Web server 800 on which a request accepting application 801 operates, a request information DB 802, a target apparatus information DB 803, a target information DB 804, and the like.

The request accepting application 801 is a program for displaying an interactive user interface for inputting information required for a learning request, on the request terminal 805, and providing a function for acquiring information that has been input by the requester 101. The request information DB 802 is a database that stores the learning request information 102 that has been accepted. The target apparatus information DB 803 is a database that stores information regarding the target apparatus 104 of the requester 101 such as the target apparatus model information 701, and the target information DB 804 is a database that stores information regarding the target 105 such as the target model information 702.

The request accepting unit 200 presents, to the requester 101, a learning menu for selecting a desired learning model from among a plurality of learning models registered in a training information DB 302. When a desired learning model is designated by the requester 101, the request accepting unit 200 accepts information required for carrying out machine learning, using the training information 304 corresponding to the designated learning model (type of machine learning), and generates the learning request information 102. Items that need to be input include the type and specification of input data, the learning goal, the type and specification of output data, information for specifying a target apparatus or a target apparatus model, information for specifying a target or a target model, and the like.

The request accepting unit 200 registers the learning request information 102 to the request information DB 802. The learning request information 102 includes information for specifying the training information 304 corresponding to a selected learning model, information that has been input by the requester 101 (e.g., the value of a parametric item), and the like. The request accepting unit 200 notifies the learning instruction unit 202 that registration of the learning request information 102 is complete.

Note that the request accepting unit 200 can also receive, from the request terminal 805, a request file in which information required for learning is written using a system descriptive language or the like. For example, if a learning model desired by the requester 101 is not in the learning menu, the requester 101 can create a request file in which a desired learning content is written, and make a learning request. If the learning request in the request file is accepted, an AI engineer creates a new learning model-based on the request file, and adds the new learning model to the learning menu.

### Target Apparatus 104

The requester 101 designates the target apparatus 104 that is a target to which an ability is provided, and requests learning. Any apparatus to which a new ability that is compatible with the ability acquisition model 500 can be added can be the target apparatus 104. Examples thereof can include an image classification apparatus for classifying still images, a monitoring apparatus that performs monitoring using sensor data, a prediction system that predicts movement of a target using a moving image, a Web service system, a driving apparatus, and the like.

Fig. 7 schematically shows the configuration of a target apparatus. Schematically speaking, the target apparatus 104 includes the ability setting unit 900, the configuration 901 corresponding to the ability acquisition model 500, and the basic configuration 902 originally provided in the target apparatus 104. The configuration 901 corresponding to the ability acquisition model 500 is constituted by the data input unit 903, the ability recipient unit 904, and the data output unit 905. The ability setting unit 900 has a function for setting the configuration 901 corresponding to the ability acquisition model 500 such that the ability recipient unit 904 can exert a new ability, using the ability providing data 103 that is provided from this system 100.

The configuration 901 corresponding to the ability acquisition model 500 is constituted by hardware whose function can be changed. For example, a configuration may be adopted in which a program of the FPGA can be rewritten. A configuration may also be adopted in which a program that is executed by a processor such as a CPU or GPU can be changed, or a parameter that is used in the program can be changed. For example, by changing a parameter for a program for performing emulation of a neural network, a function of the neural network can be changed. Alternatively, a configuration may also be adopted in which a function is changed by replacing a portion of a component or an apparatus that is connected.

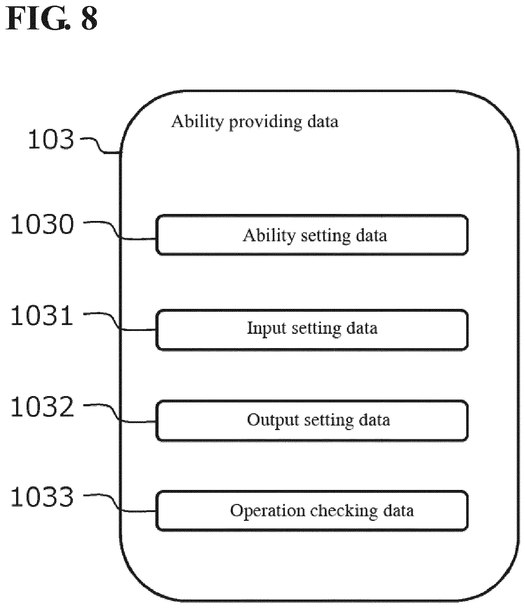

As shown in Fig. 8, the ability providing data 103 has a data structure including ability setting data 1030, input setting data 1031, and output setting data 1032, for example. The ability setting data 1030 is data for setting, in the ability recipient unit 904, a function for executing a new ability acquired through learning (e.g., an ability of classifying images using a neural network). The input setting data 1031 is data for setting, in the data input unit 903, a function related to the interface of data input to the ability recipient unit 904. Examples of the function related to interface of data input include a function for importing the necessary data from the basic configuration 902 of the target apparatus 104 into the data input unit 903, a function for importing necessary data from a device other than the target apparatus 104 (e.g., a sensor) into the data input unit 903, a function for performing a necessary process (e.g., averaging, integration, sampling, denoising, feature amount extraction, binarization, color conversion, and resolution conversion) on imported data, a function for converting a data format so as to be compatible with the ability recipient unit 904, and the like, and it is preferred that setting of at least one of these functions is given as the input setting data 1031. In addition, the output setting data 1032 is data for setting, in the data output unit 905, a function related to an interface of data output from the ability recipient unit 904. Examples of the function related to an interface of data output include a function for performing a necessary process (e.g., averaging, integration, sampling, denoising, feature amount extraction, binarization, color conversion, and resolution conversion) on data that is output from the ability recipient unit 904, a function for converting a data format so as to be compatible with the basic configuration 902 of the target apparatus 104, and the like, and it is preferred that setting of at least one of these functions is given as the output setting data 1032. The ability setting data 1030, the input setting data 1031, and the output setting data 1032 may be programs themselves, may be parameters that are used in programs, or may be both programs and parameters. The ability setting unit 900 sets the configuration 901 corresponding to the ability acquisition model 500 using each piece of setting data given by the ability providing data 103, and as a result, the data input unit 903, the ability recipient unit 904, and the data output unit 905 can execute information processing corresponding to the new ability.

The ability providing data 103 can include operation checking data 1033 as necessary. The operation checking data 1033 is data that is used for checking whether or not a new ability that has been set in the data input unit 903, the ability recipient unit 904, and the data output unit 905 operates normally. By providing the data 1030 to 1031 for setting a new ability and the operation checking data 1033 as a set, the requester him- or herself or the target apparatus 104 itself can easily perform an operation check on whether or not a new ability has been embedded successfully, which increases user-friendliness.

The operation checking data 1033 includes one or more pieces of input data and determination information for determining whether or not, when the input data is input to the data input unit 903, the data is data that should be output from the data output unit 905 (correct output data) after processing performed by the ability recipient unit 904. For example, if the function that is added to the ability recipient unit 904 is an ability of classifying still images, the operation checking data 1033 may include one or more pieces of still image data as the input data, and correct classification of each piece of still image data as the determination information. In addition, if the function that is added to the ability recipient unit 904 is an ability of inspecting an image of a product, the operation checking data 1033 may include image data of non-defective products and image data of defective products as the input data, and correct inspection results (non-defective product or defective product) for each piece of the image data as the determination information. In addition, if the function that is added to the ability recipient unit 904 is an ability of identifying a speaker's voice of a speech, the operation checking data 1033 may include one or more pieces of voice data as the input data, and information regarding the speaker of each piece of the voice data as the determination information.

If the ability providing data 103 includes the operation checking data 1033, the ability setting unit 900 sets the setting data 1030 to 1032 as the configuration 901 of the target apparatus 104, and, after that, inputs the input data in the operation checking data 1033 to the data input unit 903. The ability setting unit 900 then performs determination regarding data that is output from the data output unit 905 using the determination information in the operation checking data 1033, and checks whether or not correct output has been obtained. Accordingly, it is possible to check a series of operations of the data input unit, the ability unit, and the data output unit. If correct output has been obtained, the new ability has been successfully added to the target apparatus 104. On the other hand, if the data that is output from the data output unit 905 is different from the correct output, it can be concluded that the ability providing data 103 has a defect, or the settings in the configuration 901 of the target apparatus 104 have a defect. In this case, it is preferred that the ability setting unit 900 attempts resetting using the ability providing data 103, or notifies the learning service providing system 100 of the defect. Accordingly, an operation check and defect handling can be automatically performed, which increases user-friendliness.

The data input unit 903 that has been set acquires data from the basic configuration 902 of the target apparatus 104, performs a necessary process, converts the data format such that the data is compatible with the ability recipient unit 904, and inputs the data. For example, camera data, sensor data, and event data are input as input data. In natural language processing, a large number of text files is input as input data.

The data output unit 905 that has been set performs a necessary process on data that is output from the ability recipient unit 904, converts the data format such that the data is compatible with the basic configuration 902 of the target apparatus 104, and outputs the data. For example, output of the neural network embedded in the ability recipient unit 904 is input to the data output unit 905, and data is output from the data output unit 905 to the basic configuration 902.

The ability recipient unit 904 will be described further in detail by providing a specific example. For example, the ability recipient unit 904 accepts (receives) a new ability, by configuring a neural network based on the ability providing data 103 that has been input from the outside. The ability recipient unit 904 and the ability providing data 103 can be realized as follows, for example.

-Rewritable FPGA. In this case, for example, a circuit of a neural network and data of the parameters that are written in the FPGA is set as ability providing data.
- Ability is implemented as a program for a CPU. In this case, for example, a CPU program in an executable format for calculating an operation of a neural network circuit is set as ability providing data.
- Ability is implemented as a program for a GPU. In this case, for example, a GPU program in an executable format for calculating an operation of a neural network circuit is set as ability providing data.
- Ability is added as a component. In this case, for example, a rewritable FPGA in which a neural network is written is set as a component that includes ability providing data.
- Ability is used as a cloud service. In this case, for example, a program for using a network service in which one of the above-described pieces of ability providing data is embedded is set as ability providing data.
- Ability externally provided by an apparatus other than the target apparatus is used. In this case, a program for using an apparatus in which one of the above-described pieces of ability providing data is embedded is set as ability providing data.
- Ability is added as an apparatus. In this case, for example, a program for using an apparatus in which one of the above-described pieces of ability providing data is embedded is set as ability providing data.

### Target Apparatus Model

Whatever type of apparatus the target apparatus 104 may be, the target apparatus 104 can be modeled by combining the configuration 901 corresponding to the ability acquisition model 500 and the basic configuration 902 originally provided in the target apparatus 104, as shown in Fig. 7. When a basic configuration model corresponding to the basic configuration 902 and the ability acquisition model 500 are combined, a model of the target apparatus 104 after acquiring a new ability is obtained. If this target apparatus model and a target model that models the target 105 that is outside of the target apparatus 104 are used, it is possible to simulate an operation of the target apparatus 104 on a computer. Regarding the basic configuration model, not all of the configurations of the target apparatus 104 necessarily need to be modeled. At least, it is sufficient that the configuration of a portion that affects and is affected by the ability acquisition model 500 is defined by the basic configuration model.

In this embodiment, a configuration has been described in which the target apparatus 104 includes one ability acquisition model, but a configuration may also be adopted in which a plurality of ability acquisition models are included. By including a plurality of ability acquisition models, a plurality of abilities can be acquired. In the above-described embodiment, an example has been described in which the target apparatus 104 and the learning service providing system 100 are implemented as different apparatuses, but a configuration can also be adopted in which the target apparatus 104 includes a portion or all of the learning service providing system 100. Accordingly, the target apparatus 104 becomes a product having self-learning ability. For example, a configuration is possible in which a humanoid robot having a learning ability according to the present invention performs learning upon receiving a learning request from a person, and gives ability providing data to another robot having the same configuration.

The service of this system 100 is compatible with any type of target apparatus 104 as long as a target apparatus model and a target model are provided. Note that these models may be created and provided by the requester 101 him- or herself, or may be created and provided by a person other than the requester 101. For example, a vendor that provides components and products to the requester 101 may provide a model, or a service provider of this system 100 may provide a model. In addition, when a target apparatus model and a target model are already registered in the target apparatus information DB 803 and the target information DB 804 of this system 100, the requester 101 can use those models registered in the DBs. In that case, it is sufficient that, when accepting a learning request, the requester 101 is asked to input information for specifying the target apparatus 104 (e.g., the type of apparatus) or information for specifying the target apparatus model (e.g., model ID). The same applies to the target model.

### Learning Simulator 203

Fig. 9 shows a detailed configuration of the learning instruction unit 202 and the learning simulator 203.

The learning simulator 203 implements machine learning of a new ability that is added to the target apparatus 104, using the basic configuration model 1006, the ability acquisition model 1002, and a target model 1007 of the target apparatus 104, while simulating an operation of the target apparatus 104. The ability acquisition model 1002 includes the data input unit 1003, the ability unit (ability acquisition unit) 1004, and the data output unit 1005.

The ability acquisition unit 1004 simulates a portion that carries out the ability that is embedded in the target apparatus 104 of the requester 101. When performing learning, the circuit configuration of the ability acquisition unit 1004 can be changed as appropriate. The ability acquisition unit 1004 can be realized by a neural network of Deep Learning, for example. The number of layers of the neural network and the configuration of each of the layers are set based on the learning model information 700.

The data input unit 1003 receives data from the outside of the ability acquisition model 1002, performs necessary processing, and, after that, simulates an operation of inputting data to the ability acquisition unit 1004. The data input unit 1003 can receive data from the basic configuration 902 of the target apparatus 104, but can also receive data from the outside of the target apparatus 104. As a mode in which data is received from the outside of the target apparatus 104, a mode in which sensor data is acquired from a sensor connected to the target apparatus 104, a mode in which data is acquired from a database, a mode in which a data stream is received through a network, and the like are envisioned.

The data output unit 1005 simulates an operation of receiving data from the ability acquisition unit 1004, performing necessary processing, and outputting data to the outside of the ability acquisition model 1002. The data output unit 1005 converts output of the neural network of the ability acquisition unit 1004 so as to have a data format required by the basic configuration 902 of the target apparatus 104 or an apparatus outside of the target apparatus 104, for example.

The basic configuration model 1006 simulates an operation of the basic configuration 902 of the target apparatus 104. If the ability acquisition unit 1004 and the basic configuration 902 of the target apparatus 104 affect each other, the data input unit 1003 acquires the necessary data from the basic configuration model 1006, and the data output unit 1005 passes output of the ability acquisition unit 1004 to the basic configuration model 1006.

The target model 1007 simulates the target 105 that is outside of the target apparatus 104. For example, the target model 1007 simulates another apparatus to which the target apparatus 104 is connected, the environment (including physical phenomenon) surrounding the target apparatus 104, devices handled by the target apparatus 104, an object manufactured/processed by the target apparatus 104, an operator that operates the target apparatus 104, and the like.

For example, the learning simulator 203 may be constituted by a cloud server group installed on the Internet, or may be constituted by a private server group that is on the local area network. A dedicated system such as an embedded simulator may be used in order to increase the speed of simulation processing. A configuration may be adopted in which a portion of software processing is replaced with hardware. For example, a configuration can be adopted in which an optimum condition for an apparatus that carries out simulation is selected for each learning model, for example, a request with a large data amount, a configuration with a large number of layers, and a configuration in which a real-time property is required for learning.

The speed of simulation can be increased, for example, using a method in which distributed processing that is performed by a large number of CPUs is used, a method in which a high-speed calculation apparatus called GPU is used, and the like. In addition, by configuring a neuro circuit using an FPGA and the like, a parallel operation is performed, and the speed of simulation can be increased. Such methods for increasing a speed can be included in a learning simulator model.

A configuration can be adopted in which a simulator is connected to an actual machine (the target apparatus 104 of the requester 101). For example, the target apparatus 104 of the requester 101 may be connected to a simulator (a computer that executes the simulator). Alternatively, a configuration can be adopted in which simulation is executed using a circuit (e.g., a CPU, a GPU, and a FPGA) of the target apparatus 104 of the requester 101. By applying IoT techniques, real-time big data can be handled. Using such techniques, it is possible to transmit various types of data related to the target apparatus 104 of the requester 101 to the simulator via the Internet in real time, and perform a simulation using the data. Alternatively, a configuration may be adopted in which the simulator has a function equivalent to a model of the target apparatus 104.

An apparatus that provides a service may be used as a simulator. For example, in the case of a Web service in which natural language processing is performed, both the Web service and learning service can be implemented using server resources on the cloud.

### Learning Instruction Unit 202

The learning instruction unit 202 is a processing unit that is in charge of setting and control of training, and, as shown in Fig. 9, has a training setting unit 1000 and a training control unit 1001. The training setting unit 1000 performs settings required for training on the learning simulator 203, based on the learning request information 102 accepted from the requester 101 and the corresponding training information 304. The training control unit 1001 controls the learning simulator 203 so as to carry out training, and develop (generate through learning) an ability that is added to the target apparatus 104.

Specifically, the training setting unit 1000 sets a learning goal, specification of input/output data and a processing content of the data input unit 1003 and the data output unit 1005, the internal configuration of the ability acquisition unit 1004, a training program, and the like, based on the learning model information 700. In addition, the training setting unit 1000 sets input/output between the basic configuration model 1006 of the target apparatus 104 and the ability acquisition model 1002, and the like, based on the target apparatus model information 701, and further sets the target model 1007 based on the target model information 702.

### Ability providing data Generation Unit 204

The ability-providing-data generation unit 204 converts a learning result of the learning simulator 203 (an ability acquired through training) into data (the ability providing data 103) for being embedded into the ability recipient unit 904 of the target apparatus 104. A conversion program for generating the ability providing data 103 from a learning result is given in advance from the ability-providing-data generation model information 704. Using this conversion program, the ability providing data 103 (e.g., a program and a parameter used for the program) compatible with the hardware configuration of the target apparatus 104 (e.g., a circuit configuration of an FPGA, a CPU, a GPU, etc.) is generated. The ability providing data 103 preferably includes ability setting data, input setting data, and output setting data as described above.

### Service Providing Unit 205

The service providing unit 205 provides, to the requester 101, the ability providing data 103 generated by the ability-providing-data generation unit 204. The providing method may be any method. For example, the service providing unit 205 may transmit the ability providing data 103 to the requester 101 using an electronic means (e.g., an electronic mail, FTP, and downloading from a file server). In addition, the service providing unit 205 may record the ability providing data 103 to a recording medium such as a DVD-ROM, and send the recording medium to the requester 101. In addition, the service providing unit 205 may directly transmit the ability providing data 103 to the target apparatus 104 of the requester 101 via a network. The ability providing data 103 may be provided as a program that can be executed by the target apparatus 104, or may be provided as a program that is executed on a cloud or a service that is provided from the cloud. In addition, the ability providing data 103 may be provided in form of an IoT service in which a plurality of apparatuses are combined. In addition, the ability providing data 103 may be embedded in a semiconductor component, or may be implemented in a component that can be embedded into the target apparatus 104. Alternatively, a serviceman may visit the requester 101, and implement the ability providing data 103 in the target apparatus 104. In addition, the target apparatus 104 may be kept from the requester 101, and be returned after embedding the ability providing data 103 into the target apparatus 104.

### Operation of System

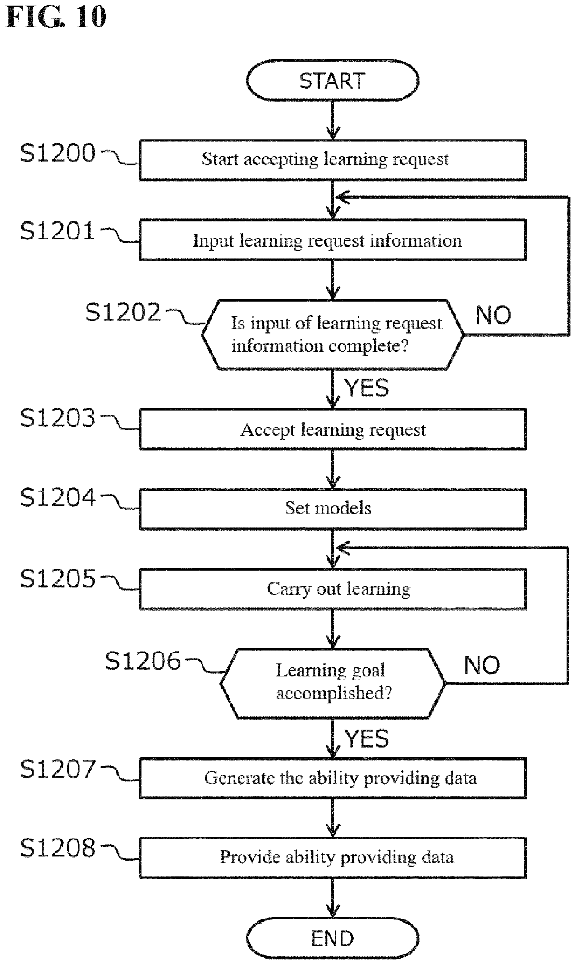

Fig. 10 shows a flow of processing from accepting a learning request to providing ability providing data in the learning service providing system 100.

When the requester 101 accesses this system 100 via the Internet, and makes a new learning request, the request accepting unit 200 starts accepting the learning request (step S1200). The request accepting unit 200 presents a request input screen on a terminal 805 of the requester 101, and prompts the requester 101 to input information required for a desired learning model and learning (step S1201). When input of learning request information is complete (YES in step S1202), the request accepting unit 200 registers the learning request information 102 to the request information DB 802, and notifies the learning instruction unit 202 that a new learning request has been accepted (step S1203).

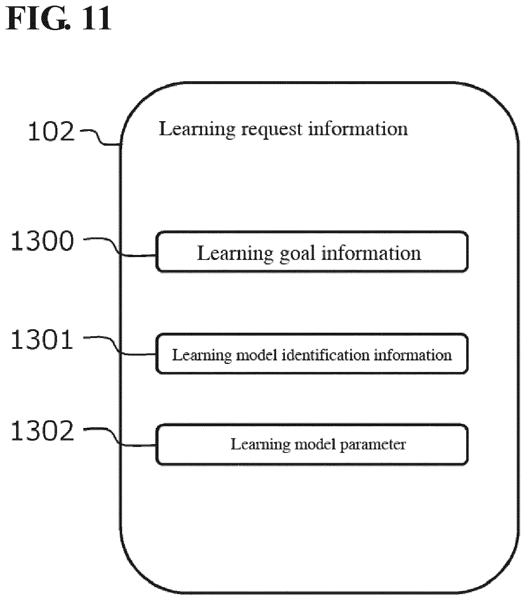

Fig. 11 shows an example of the data structure of the learning request information 102. The learning request information 102 includes learning goal information 1300, learning model identification information 1301, and learning model parameters 1302. The learning goal information 1300 includes information regarding a learning goal designated by the requester 101. The learning model identification information 1301 includes information for specifying the training information 304 corresponding to the learning model designated by the requester 101 (e.g., the ID of the training information 304 in the training information DB302). The learning model parameters 1302 include information that has been input by the requester 101 with respect to parametric items of the learning model.

Next, the learning instruction unit 202 sets a learning model, a target apparatus model, a target model, and the like for the learning simulator 203 in accordance with the learning request information 102 (step S1204), and lets the learning simulator 203 carry out the training (step S1205). For example, in the case of a neural network for Deep Learning or the like, output is estimated while changing the parameters stepwise for each of a plurality of layers, and the parameters are optimized such that the adaptability to the learning goal increases. When the adaptability to the learning goal satisfies a completion condition that has been set in advance (YES in step S1206), the learning instruction unit 202 ends training.

Next, the ability-providing-data generation unit 204 generates the ability providing data 103 based on a learning result of the learning simulator 203 (an ability acquired through training) (step S2107). Lastly, the service providing unit 205 provides the ability providing data 103 to the requester 101 (step S1208).

### Advantages of This System

There are the following advantages for the requester 101. First, if this system 100 is used, the requester 101 him- or herself does not need to carry out machine learning, and thus it is possible to increase the efficiency of development work for adding a new ability to the target apparatus 104. In addition, it suffices for the requester 101 to only give information required for machine learning, and thus it is easy even for a person without knowledge or a system related to machine learning to use this system 100. In addition, a learning result is provided as the ability providing data 103 (data for adding a new ability to the target apparatus 104), and thus the requester 101 can easily add a new ability acquired through machine learning to the target apparatus 104 itself.

On the other hand, there are the following advantages for a service provider. Information required for performing machine learning is provided from the requester 101, and thus it is possible to secure that machine learning is executed in accordance with the request. In addition, processing for accepting a request from the requester 101, processing for carrying out machine learning, and the like can be automated as much as possible, and the labor for such processing can be minimized. Furthermore, a learning result is converted into the ability providing data 103, and is provided to the requester 101, and thus provision of the learning result and implementation of the learning result in the target apparatus 104 can be automated as much as possible, and the labor thereof can be minimized.

In addition, by performing simulation using a target apparatus model and a target model in the course of machine learning, it is possible to perform machine learning in which behavior, influence, and the like of the target apparatus 104 and the target 105 are taken into consideration, without an actual machine, namely the target apparatus 104. If an actual machine, namely the target apparatus 104 is unnecessary, it becomes very easy to realize execution of machine learning on behalf of someone else. In particular, in the case of a large apparatus such as a manufacturing facility and an apparatus that is operating, it is not realistic to use an actual machine for machine learning. This learning service can be used even in such cases, and has a superior degree of freedom of application and convenience.

In addition, under the assumption that the target apparatus 104 has an architecture that is compatible with the ability acquisition model 500, it is possible to provide ability providing data 103 having a data structure that is compatible with the ability acquisition model 500, and thus it is easy to embed a new ability into the target apparatus 104. Thus, it is possible to increase the efficiency of development work for adding a new ability to the target apparatus 104.

Note that the configuration of the above-described embodiment merely indicates a specific example of the present invention, and is not intended to limit the scope of the present invention. The present invention can adopt various specific configurations without departing from its technical idea. For example, the system configuration, data structure, user interface, parameter, and the like mentioned in the above embodiment are examples, and can be changed as appropriate according to a machine learning type, purpose of learning, ability desired to be acquired, configuration of a target apparatus, and the like. In addition, in the above embodiment, an example has been described in which a new ability to be added to the target apparatus 104 is acquired through machine learning, but a method for acquiring an ability is not limited to machine learning. For example, an ability may be acquired through three-dimensional structure simulation or fluid simulation using a finite element method, an optimization problem, or the like, or ability may be developed by a person.

### Additional Remark 1

An ability-providing-data generation apparatus includes at least one memory and at least one hardware processor connected to the memory, and generates ability providing data that is data for adding a new ability to a target apparatus,
as an architecture for additionally embedding a new ability into a basic configuration of the target apparatus, the target apparatus has an architecture that is modeled by an ability acquisition model including an ability unit that executes an ability, a data input unit that is an interface for input of the ability unit, and a data output unit that is an interface for output of the ability unit, and
the hardware processor generates ability providing data including ability setting data for setting a function in the ability unit in the ability acquisition model of the target apparatus, input setting data for setting a function in the data input unit in the ability acquisition model of the target apparatus, and output setting data for setting a function in the data output unit in the ability acquisition model of the target apparatus.

### Additional Remark 2

In an ability-providing-data generation method for generating ability providing data that is data for adding a new ability to a target apparatus, using a computer having at least one memory and at least one hardware processor connected to the memory,
as an architecture for additionally embedding a new ability into a basic configuration of the target apparatus, the target apparatus has an architecture that is modeled by an ability acquisition model including an ability unit that executes an ability, a data input unit that is an interface for input of the ability unit, and a data output unit that is an interface for output of the ability unit, and
the computer executes steps of generating ability providing data including ability setting data for setting a function in the ability unit in the ability acquisition model of the target apparatus, input setting data for setting a function in the data input unit in the ability acquisition model of the target apparatus, and output setting data for setting a function in the data output unit in the ability acquisition model of the target apparatus.

## Claims

1. An ability-providing-data generation apparatus for generating ability providing data that is data for adding a new ability to a target apparatus,
wherein, as an architecture for additionally embedding a new ability in a basic configuration of the target apparatus, the target apparatus has an architecture that is modeled as an ability acquisition model including an ability unit configured to execute an ability, a data input unit that is an interface for input of the ability unit, and a data output unit that is an interface for output of the ability unit, and
the ability-providing-data generation apparatus has an ability-providing-data generation unit configured to generate ability providing data including ability setting data for setting a function in the ability unit in the ability acquisition model of the target apparatus, input setting data for setting a function in the data input unit in the ability acquisition model of the target apparatus, and output setting data for setting a function in the data output unit in the ability acquisition model of the target apparatus.

2. The ability-providing-data generation apparatus according to claim 1,
wherein the ability setting data is data for setting, in the ability unit, a function for executing the new ability that is to be added to the target apparatus,
the input setting data is data for setting, in the data input unit, a function related to an interface for input to the ability unit, and
the output setting data is data for setting, in the data output unit, a function related to an interface for output from the ability unit.

3. The ability-providing-data generation apparatus according to claim 2,
wherein the function related to the interface for input to the ability unit includes at least one of a function for importing data from the basic configuration of the target apparatus into the data input unit, a function for importing data from a device other than the target apparatus into the data input unit, a function for performing a process on imported data, and a function for converting a data format so as to be compatible with the ability unit.

4. The ability-providing-data generation apparatus according to claim 3,
wherein the function related to the interface for input to the ability unit includes a function for importing sensor data from a sensor to the data input unit.

5. The ability-providing-data generation apparatus according to any one of claims 2 to 4,
wherein the function related to the interface for output from the ability unit includes at least one of a function for performing a process on data that is output from the ability unit, a function for converting a data format so as to be compatible with the basic configuration of the target apparatus, and a function for converting a data format so as to be compatible with a device other than the target apparatus.

6. The ability-providing-data generation apparatus according to any one of claims 1 to 5,
wherein the ability providing data includes operation checking data that is used for checking whether or not the new ability that has been added operates normally after the functions are respectively set in the ability unit, the data input unit, and the data output unit based on the ability providing data.

7. The ability-providing-data generation apparatus according to claim 6,
wherein the operation checking data includes one or more pieces of input data and determination information for determining, when the input data is input to the data input unit and after being processed in the ability unit, whether or not it is the data that should be output from the data output unit, and
it is checked whether or not the new ability that has been added operates normally by inputting the input data to the data input unit, and performing, using the determination information, a determination regarding the data that is output from the data output unit.

8. The ability-providing-data generation apparatus according to claim 7,
wherein the one or more pieces of input data include image data, and
the determination information includes classification information for classifying the image data.

9. The ability-providing-data generation apparatus according to any one of claims 1 to 8,
wherein the ability providing data includes data that is embedded into a circuit of the target apparatus.

10. The ability-providing-data generation apparatus according to claim 9,
wherein the circuit is a rewritable electronic circuit, and
the ability providing data includes data that is written in the rewritable electronic circuit.

11. The ability-providing-data generation apparatus according to any one of claims 1 to 8,
The ability providing data includes a program that is executed by a processor of the target apparatus.

12. The ability-providing-data generation apparatus according to any one of claims 1 to 11,
wherein the new ability is an ability that is acquired through machine learning.

13. An ability-providing-data generation method for generating ability providing data that is data for adding a new ability to a target apparatus,
wherein, as an architecture for additionally embedding a new ability in a basic configuration of the target apparatus, the target apparatus has an architecture that is modeled as an ability acquisition model including an ability unit that executes an ability, a data input unit that is an interface for input of the ability unit, and a data output unit that is an interface for output of the ability unit, and
a computer has a step of generating ability providing data including ability setting data for setting a function in the ability unit in the ability acquisition model of the target apparatus, input setting data for setting a function in the data input unit in the ability acquisition model of the target apparatus, and output setting data for setting a function in the data output unit in the ability acquisition model of the target apparatus.

14. A program for causing a computer to execute the step of the ability providing data generation method according to claim 13.

15. A data structure of ability providing data that is data for adding a new ability to a target apparatus,
wherein, as an architecture for additionally embedding a new ability in a basic configuration of the target apparatus, the target apparatus has an architecture that is modeled as an ability acquisition model including an ability unit that executes an ability, a data input unit that is an interface for input of the ability unit, and a data output unit that is an interface for output of the ability unit, and
the ability providing data includes,
ability setting data for setting a function in the ability unit in the ability acquisition model of the target apparatus,
input setting data for setting a function in the data input unit in the ability acquisition model of the target apparatus, and
output setting data for setting a function in the data output unit in the ability acquisition model of the target apparatus.
